(19) Europäisches Patentamt
European Patent Office
Office européen des brevets

(11) **EP 3 435 329 A1**

(12) **DEMANDE DE BREVET EUROPEEN**

(43) Date de publication:
**30.01.2019 Bulletin 2019/05**

(51) Int Cl.:
*G06T 7/207* *(2017.01)*

(21) Numéro de dépôt: **18184109.9**

(22) Date de dépôt: **18.07.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **25.07.2017 FR 1757074**

(71) Demandeur: **Parrot Drones
75010 Paris (FR)**

(72) Inventeur: **REMOND, Fabien
94240 L'HAY LES ROSES (FR)**

(74) Mandataire: **Lavoix
2, place d'Estienne d'Orves
75441 Paris Cedex 09 (FR)**

(54) **DISPOSITIF ÉLECTRONIQUE ET PROCÉDÉ D'ESTIMATION D'UN DÉPLACEMENT D'UNE SCÈNE OBSERVÉE PAR UN DRONE, APPAREIL ÉLECTRONIQUE DE CALCUL D'UNE VITESSE SOL DU DRONE, DRONE ET PROGRAMME D'ORDINATEUR ASSOCIÉS**

(57) Ce dispositif électronique (40) d'estimation d'un déplacement d'une scène (14) observée par un capteur d'images (12) équipant un drone (10), comprend un premier module (42) d'acquisition d'une succession d'images de la scène, prises par le capteur d'images, et un module (44) d'estimation, via un algorithme à flot optique appliqué itérativement à plusieurs niveaux successifs, d'un déplacement de la scène entre une image antérieure et une image courante acquises, l'image d'un niveau étant une image sous-échantillonnée de l'image du niveau suivant, l'image du niveau final étant l'image acquise.

Le module d'estimation (44) calcule au moins une estimation du déplacement de la scène à chaque niveau, l'image antérieure étant translatée d'un déplacement estimé, lors du passage d'un niveau au suivant.

Le module d'estimation (44) est configuré en outre pour déterminer un arrondi entier du déplacement estimé, l'image antérieure étant alors translatée dudit déplacement arrondi, lors du passage d'un niveau respectif au suivant.

FIG.1

EP 3 435 329 A1

**Description**

La présente invention concerne un dispositif électronique d'estimation d'un déplacement d'une scène observée par un capteur d'images équipant un drone. Le dispositif d'estimation comprend un premier module d'acquisition configuré pour acquérir une succession d'images de la scène, prises par le capteur d'images, et un module d'estimation configuré pour calculer une estimation, via un algorithme à flot optique, d'un déplacement de la scène entre une image antérieure et une image courante acquises.

L'invention concerne également un appareil électronique de calcul d'une vitesse sol du drone, l'appareil comprenant un deuxième module d'acquisition configuré pour acquérir une altitude mesurée, un tel dispositif d'estimation configuré pour estimer un déplacement d'un terrain survolé par le drone, et un module de calcul configuré pour calculer la vitesse sol du drone, à partir de l'altitude mesurée acquise et du déplacement du terrain estimé.

L'invention concerne également un drone comprenant un tel appareil électronique de calcul de la vitesse sol du drone.

L'invention concerne également un procédé d'estimation d'un déplacement de la scène observée par le capteur d'images équipant le drone, le procédé étant mis en oeuvre par un tel dispositif électronique d'estimation.

L'invention concerne également un programme d'ordinateur comportant des instructions logicielles qui, lorsqu'elles sont exécutées par un ordinateur, mettent en oeuvre un tel procédé d'estimation.

L'invention concerne le domaine des drones, c'est-à-dire des appareils motorisés volants pilotés à distance. L'invention s'applique notamment aux drones à voilure tournante, tels que les quadricoptères, tout en s'appliquant également à d'autres types de drones, par exemple les drones à voilure fixe.

L'invention est particulièrement utile pour calculer précisément une vitesse du drone, en particulier une vitesse sol du drone, afin de mieux contrôler le drone en fonction d'une consigne de vitesse donnée.

L'invention est aussi utile pour contrôler le drone pour rester immobile, lorsque le pilote n'envoie pas de commande, ceci même s'il y a des perturbations externes comme du vent.

L'invention est également utile lorsque le drone est dans un mode de poursuite dans le but de suivre une cible donnée, telle que le pilote du drone pratiquant une activité sportive, et qu'il doit alors être capable d'estimer précisément un déplacement d'une scène observée par un capteur d'images équipant le drone, et en outre de calculer une vitesse sol du drone avec une bonne précision, pour un suivi efficace de la cible.

On connaît du document EP 2 400 460 A1 un dispositif électronique et un procédé d'estimation d'un déplacement différentiel d'une scène captée par une caméra à visée verticale équipant un drone, ce déplacement différentiel estimé permettant ensuite d'évaluer la vitesse horizontale du drone.

L'estimation du déplacement comprend la mise à jour périodique continue d'une représentation multi-résolution de type pyramide d'images, modélisant à différentes résolutions successivement décroissantes une même image captée de la scène, et pour chaque nouvelle image captée, l'application à ladite représentation multi-résolution d'un algorithme itératif de type flot optique permettant d'estimer le mouvement différentiel de la scène d'une image à la suivante.

L'estimation du déplacement comprend en outre, sous certaine(s) condition(s), le basculement de l'algorithme à flot optique vers un algorithme de type détecteur de coins pour l'estimation du mouvement différentiel de la scène d'une image à la suivante.

Les principes de l'algorithme dit à flot optique sont par exemple décrits dans les documents suivants : « An Iterative Image Registration Technique with an Application to Stereo Vision » de Lucas B. D. et Kanade T. dans Proc. DARPA Image Understanding Workshop, pp. 121-130, en 1981 ; « Determining Optical Flow » de Horn B. K. P. et Schunk B. dans Artificial Intelligence, (17):185-204,en 1981 ; et « 3D Pose Estimation Based on Planar Object Tracking for UAVs Control » de Mondragon I. et al. dans Proc. IEEE Conférence on Robotics and Automation, pp. 35-41, en mai 2010. L'article de Mondragon I. et al. décrit une technique multi-résolution pour estimer le flot optique avec des résolutions différentes pour piloter l'atterrissage d'un drone.

Toutefois, une telle estimation n'est pas toujours optimale.

Le but de l'invention est alors de proposer un dispositif électronique et un procédé associé qui permettent d'estimer plus efficacement un déplacement d'une scène observée par un capteur d'images équipant un drone.

A cet effet, l'invention a pour objet un dispositif électronique d'estimation d'un déplacement d'une scène observée par un capteur d'images équipant un drone, le dispositif comprenant :

- un premier module d'acquisition configuré pour acquérir une succession d'images de la scène, prises par le capteur d'images,
- un module d'estimation configuré pour calculer une estimation, via un algorithme à flot optique, d'un déplacement de la scène entre une image antérieure et une image courante acquises, l'algorithme à flot optique étant appliqué itérativement à plusieurs niveaux successifs, l'image associée à un niveau respectif étant une image sous-échantillonnée de l'image associée au niveau suivant, l'image associée au niveau final étant l'image acquise,

le module d'estimation étant configuré pour calculer au moins une estimation du déplacement de la scène à chaque niveau, l'image antérieure étant en outre translatée d'un déplacement estimé respectif, lors du passage d'un niveau respectif au suivant,

le module d'estimation étant configuré en outre pour déterminer un arrondi à la valeur entière du déplacement estimé respectif, l'image antérieure étant alors translatée du déplacement arrondi, lors du passage d'un niveau respectif au suivant.

Avec le dispositif d'estimation de l'état de la technique, la valeur estimée via l'algorithme à flot optique du déplacement de la scène est une valeur décimale, représentée sous forme d'un nombre flottant. L'image antérieure est alors translatée d'une valeur décimale de pixels, ce qui implique une interpolation de l'image antérieure translatée de ladite valeur décimale estimée de pixels. Puis grâce à une nouvelle itération de l'algorithme à flot optique entre l'image antérieure translatée et l'image courante, une estimation de la translation résiduelle est obtenue. La translation estimée totale est alors égale à la somme de la translation appliquée à l'image antérieure et de la translation résiduelle calculée à cette nouvelle itération de l'algorithme à flot optique.

Avec le dispositif d'estimation selon l'invention, la valeur estimée via l'algorithme à flot optique du déplacement de la scène est arrondie à une valeur entière, telle que la valeur entière la plus proche. L'image antérieure est alors translatée de cette valeur entière de pixels, ce qui permet alors d'éviter l'interpolation précitée, faite avec le dispositif de l'état de la technique, et permet donc de réduire la complexité algorithmique.

Suivant d'autres aspects avantageux de l'invention, le dispositif électronique d'estimation comprend une ou plusieurs des caractéristiques suivantes, prises isolément ou suivant toutes les combinaisons techniquement possibles :

- l'estimation du déplacement de la scène à chaque niveau est calculée entre une image antérieure et une image courante, et le module d'estimation est configuré en outre pour sélectionner un écart temporel entre l'image antérieure et l'image courante en fonction du déplacement déterminé précédemment au niveau final avec l'image précédant l'image courante, l'écart temporel sélectionné initialement étant prédéfini ;

- les images sont prises à une fréquence prédéfinie par le capteur d'images, et l'écart temporel entre l'image antérieure et l'image courante est un écart en nombre d'images prises, acquises par le premier module d'acquisition, l'écart en nombre d'images prises étant égal à 1 lorsque l'image antérieure et l'image courante sont deux images prises consécutivement et augmentant d'une unité pour chaque image intercalaire supplémentaire prise entre l'image antérieure et l'image courante ;

- la sélection de l'écart temporel entre l'image antérieure et l'image courante comporte une hystérésis entre l'augmentation et la diminution dudit écart temporel ;

- pour la sélection de l'écart temporel entre l'image antérieure et l'image courante, le module d'estimation est configuré pour comparer une valeur lissée courante du déplacement estimé avec au moins un seuil, la valeur lissée courante dépendant d'une valeur lissée précédente et du déplacement estimé, la valeur lissée initiale étant prédéfinie ; et

- le module d'estimation est configuré pour calculer une unique estimation du déplacement de la scène à chaque niveau et pour chaque image courante.

Lorsque la valeur résiduelle à estimer via l'algorithme à flot optique du déplacement de la scène est faible, typiquement inférieure à 0,5 pixels, la valeur estimée est arrondie à 0 et l'image antérieure n'est plus translatée. Le processus itératif, et donc la descente de gradient, est alors interrompu, ce qui peut donner un résultat assez imprécis sur cette translation résiduelle à estimer. Cette imprécision est typiquement de l'ordre de 0,1 pixel.

Lorsque la translation totale à estimer est très faible et se résume directement à cette translation résiduelle, l'estimation obtenue est alors imprécise, avec une imprécision typiquement de l'ordre de 0,1 pixel, ce qui est important lorsque l'on cherche des déplacements faibles, typiquement inférieurs à 0,5 pixel.

Le fait de sélectionner alors un écart temporel entre l'image antérieure et l'image courante en fonction du déplacement déterminé précédemment au niveau final avec l'image précédant l'image courante, et notamment d'augmenter l'écart temporel entre l'image antérieure et l'image courante pour la prochaine itération lorsque la valeur estimée du déplacement devient faible, permet de garder une précision satisfaisante, en augmentant la translation totale à estimer. Le déplacement estimé par le dispositif d'estimation selon l'invention dépend alors de l'écart temporel sélectionné entre l'image antérieure et l'image courante. Le déplacement final estimé est divisé par l'écart temporel utilisé pour retrouver le déplacement entre 2 images successives, c'est à dire avec un écart temporel unitaire, lorsque l'écart temporel est défini en nombre d'images prises. L'imprécision est ainsi nettement diminuée sur les faibles déplacements à estimer.

L'invention a également pour objet un appareil électronique de calcul d'une vitesse sol d'un drone, l'appareil comprenant :

- un deuxième module d'acquisition configuré pour acquérir une altitude mesurée, fournie par un dispositif de mesure équipant le drone,

- un dispositif d'estimation configuré pour estimer un déplacement d'une scène observée par un capteur d'images équipant le drone, la scène étant un terrain survolé par le drone, et

- un module de calcul configuré pour calculer la vitesse sol du drone, à partir de l'altitude mesurée acquise et du déplacement du terrain estimé par le dispositif d'estimation,

dans lequel le dispositif d'estimation est tel que défini ci-dessus.

L'invention a également pour objet un drone comprenant un appareil électronique de calcul d'une vitesse sol du drone, dans lequel l'appareil électronique de calcul est tel que défini ci-dessus.

L'invention a également pour objet un procédé d'estimation d'un déplacement d'une scène observée par un capteur d'images équipant un drone, le procédé étant mis en oeuvre par un dispositif électronique d'estimation, et comprenant les étapes suivantes :

- l'acquisition d'une succession d'images de la scène, prises par le capteur d'images,
- l'estimation, via un algorithme à flot optique, d'un déplacement de la scène entre une image antérieure et une image courante acquises, l'algorithme à flot optique étant appliqué itérativement à plusieurs niveaux successifs, l'image associée à un niveau respectif étant une image sous-échantillonnée de l'image associée au niveau suivant, l'image associée au niveau final étant l'image acquise,

l'étape d'estimation comportant le calcul d'au moins une estimation du déplacement de la scène à chaque niveau, l'image antérieure étant en outre translatée d'un déplacement estimé respectif, lors du passage d'un niveau respectif au suivant, l'étape d'estimation comportant en outre la détermination d'un arrondi à la valeur entière du déplacement estimé respectif, l'image antérieure étant alors translatée du déplacement arrondi, lors du passage d'un niveau respectif au suivant.

L'invention a également pour objet un programme d'ordinateur comportant des instructions logicielles qui, lorsqu'elles sont exécutées par un ordinateur, mettent en oeuvre un procédé d'estimation tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un drone comprenant un capteur d'images configuré pour prendre une succession d'images d'une scène et un dispositif électronique d'estimation selon l'invention, le dispositif d'estimation comportant un module d'estimation, via un algorithme à flot optique, d'un déplacement de la scène entre une image antérieure et une image courante acquises ;
- la figure 2 est un organigramme d'un procédé de calcul de la vitesse sol du drone, ce procédé de calcul incluant un procédé d'estimation selon l'invention ;
- la figure 3 est une représentation schématique d'une pyramide d'images mise en oeuvre par le module d'estimation de la figure 1 via l'algorithme à flot optique ; et
- la figure 4 est une représentation schématique d'une machine d'états mise en oeuvre par le module d'estimation de la figure 1 pour la sélection d'un écart temporel entre l'image antérieure et l'image courante en fonction d'un déplacement estimé avec l'image précédente.

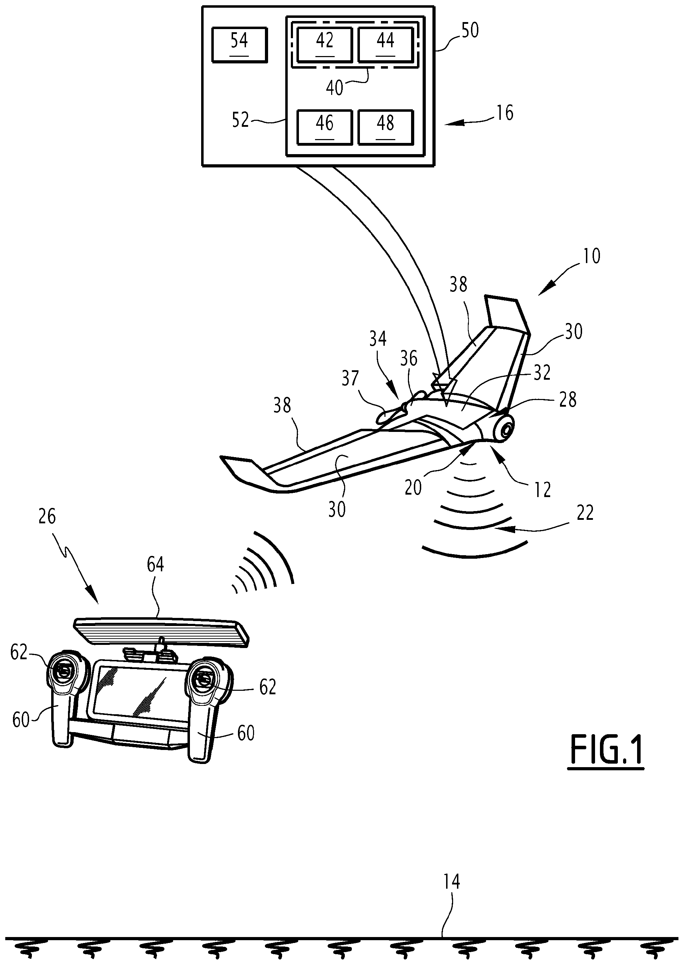

Sur la figure 1, un drone 10, c'est-à-dire un aéronef sans pilote à bord, comprend un capteur d'images 12 configuré pour prendre une succession d'images d'une scène 14, telle qu'un terrain survolé par le drone 10, et un appareil électronique de calcul 16 configuré pour calculer une vitesse sol du drone 10.

Le drone 10 comprend également un altimètre 20, tel qu'un radioaltimètre ou un télémètre à ultrasons, émettant en direction du sol un faisceau 22 permettant de mesurer l'altitude du drone 10 par rapport au terrain, c'est-à-dire par rapport au sol.

En complément facultatif, le drone 10 comprend un capteur de pression, non représenté, aussi appelé capteur barométrique, configuré pour déterminer des variations d'altitude du drone 10, telles que des variations instantanées et/ou des variations par rapport à un niveau de référence, c'est-à-dire par rapport à une altitude initiale prédéfinie. Le niveau de référence est, par exemple le niveau de la mer, et le capteur de pression est alors apte à fournir une altitude mesurée du drone 10 par rapport au niveau de la mer.

Le drone 10 est un engin volant motorisé pilotable à distance, notamment via une manette 26.

Le drone 10 comporte un module de transmission 28 configuré pour échanger des données, de préférence par ondes radioélectriques, avec un ou plusieurs équipements électroniques, notamment avec la manette 26, voire avec d'autres éléments électroniques pour la transmission de la ou des images acquises par le capteur d'image 12.

Dans l'exemple de la figure 1, le drone 10 est un drone à voilure fixe, de type aile volante. Il comprend deux ailes 30 et un fuselage 32 muni en partie arrière d'un système de propulsion 34 comportant un moteur 36 et une hélice 37. Chaque aile 30 est munie du côté du bord de fuite d'au moins une gouverne 38 orientable via un servomécanisme, non représenté, pour piloter la trajectoire du drone 10.

En variante, non représentée, le drone 10 est un drone à voilure tournante, comportant au moins un rotor, et de préférence une pluralité de rotors, le drone 10 étant alors appelé drone multirotor. Le nombre de rotors est par exemple égal à 4, et le drone 10 est alors un drone quadrirotor.

Le capteur d'images 12 est connu en soi, et est par exemple une caméra à visée verticale pointant vers le bas.

La scène 14 s'entend au sens général du terme, qu'il s'agisse d'une scène en extérieur ou à l'intérieur d'un bâtiment. Lorsque la scène 14 est un terrain survolé par le drone 10, le terrain s'entend également au sens général du terme, comme une portion de la surface de la Terre lorsqu'il s'agit un terrain extérieur, qu'il s'agisse d'une surface terrestre, ou d'une surface maritime, ou encore d'une surface comportant à la fois une portion terrestre et une portion maritime. En variante, le terrain est un terrain intérieur disposé à l'intérieur d'un bâtiment. Le terrain est également appelé sol.

L'appareil électronique de calcul 16 est par exemple embarqué à bord du drone 10, comme représenté sur la figure 1.

En variante, l'appareil électronique de calcul 16 est un appareil électronique distinct et distant du drone 10, l'appareil électronique de calcul 16 étant alors adapté pour communiquer avec le drone 10, en particulier avec le capteur d'images 12, via le module de transmission 28 embarqué à bord du drone 10.

L'appareil électronique de calcul 16 comprend un dispositif électronique d'estimation 40 configuré pour estimer un déplacement de la scène 14 observée par le capteur d'images 12, le dispositif d'estimation 40 comportant un premier module d'acquisition 42 configuré pour acquérir une succession d'images de la scène 14, prises par le capteur d'images 12, et un module d'estimation 44 configuré pour calculer une estimation, via un algorithme à flot optique, du déplacement de la scène 14 entre une image antérieure et une image courante acquises.

L'appareil électronique de calcul 16 comprend un deuxième module d'acquisition 46 configuré pour acquérir une altitude mesurée, fournie par un dispositif de mesure équipant le drone 10, tel que l'altimètre 20.

L'appareil électronique de calcul 16 comprend un module de calcul 48 configuré pour calculer la vitesse sol du drone 10, à partir de l'altitude mesurée acquise et du déplacement du terrain estimé par le dispositif d'estimation 40, la scène 14 étant alors le terrain survolé par le drone 10.

Dans l'exemple de la figure 1, l'appareil électronique de calcul 16 comprend une unité de traitement d'informations 50, formée par exemple d'une mémoire 52 et d'un processeur 54, tel qu'un processeur de type GPU (de l'anglais *Graphics Processing Unit*), ou de type VPU (de l'anglais *Vision Processing Unit*), associé à la mémoire 52.

La manette 26 est connue en soi, et permet de piloter le drone 10. Dans l'exemple de la figure 1, la manette 26 comprend deux poignées de préhension 60, chacune étant destinée à être saisie par une main respective du pilote, une pluralité d'organes de commande, dont deux manches à balai 62 (de l'anglais *joystick*), chacun étant disposé à proximité d'une poignée de préhension 60 respective et étant destiné à être actionné par le pilote, de préférence par un pouce respectif. En variante, non représentée, la manette 26 est mise en oeuvre via un ordiphone ou une tablette électronique, comme connu en soi.

La manette 26 comprend également une antenne radioélectrique 64 et un émetteur-récepteur radioélectrique, non représenté, pour l'échange de données par ondes radioélectriques avec le drone 10, à la fois en liaison montante et en liaison descendante.

Le dispositif électronique d'estimation 40 est par exemple embarqué à bord du drone 10, comme représenté sur la figure 1.

En variante, le dispositif électronique d'estimation 40 est un dispositif électronique distinct et distant du drone 10, le dispositif électronique d'estimation 40 étant alors adapté pour communiquer avec le drone 10, en particulier avec le capteur d'images 12, via le module de transmission 28 embarqué à bord du drone 10.

Le dispositif électronique d'estimation 40 comprend le premier module d'acquisition 42 et le module d'estimation 44. Il est par exemple formé du premier module d'acquisition 42 et du module d'estimation 44.

Dans l'exemple de la figure 1, le premier module d'acquisition 42 et le module d'estimation 44, ainsi que le deuxième module d'acquisition 46 et le module de calcul 48, sont réalisés chacun sous forme d'un logiciel exécutable par le processeur 54. La mémoire 52 de l'unité de traitement d'informations 50 est alors apte à stocker un premier logiciel d'acquisition configuré pour acquérir une succession d'images de la scène 14, prises par le capteur d'images 12. La mémoire 52 de l'unité de traitement d'informations 50 est apte à stocker un logiciel d'estimation configuré pour calculer une estimation, via l'algorithme à flot optique, du déplacement de la scène 14 entre l'image antérieure et l'image courante acquises. La mémoire 52 de l'unité de traitement d'informations 50 est également apte à stocker un deuxième logiciel d'acquisition configuré pour acquérir une altitude mesurée fournie par le dispositif de mesure équipant le drone 10, tel que l'altimètre 20, et un logiciel de calcul configuré pour calculer la vitesse sol du drone 10, à partir de l'altitude mesurée acquise et du déplacement du terrain estimé par le logiciel d'estimation. Le processeur 54 de l'unité de traitement d'informations 50 est alors apte à exécuter le premier logiciel d'acquisition, le logiciel d'estimation, le deuxième logiciel d'acquisition et le logiciel de calcul.

En variante non représentée, le premier module d'acquisition 42 et le module d'estimation 44, ainsi que le deuxième module d'acquisition 46 et le module de calcul 48, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

Le premier module d'acquisition 42 est configuré pour acquérir au moins deux images de la scène 14, prises par le capteur d'images 12, le déplacement de la scène 14 estimé par le module d'estimation 44 étant calculé entre l'image antérieure et l'image courante acquises. Le premier module d'acquisition 42 est en particulier configuré pour acquérir une succession d'images de la scène 14, ces images ayant été prises par le capteur 12. Le premier module d'acquisition 42 est de préférence configuré pour acquérir de manière régulière les images de la scène 14 de la part du capteur 12, ou encore au fur et à mesure que les images sont prises par le capteur 12.

Le module d'estimation 44 est configuré pour calculer une estimation du déplacement de la scène 14 entre l'image antérieure et l'image courante acquises via l'algorithme à flot optique.

L'algorithme à flot optique permet d'estimer un mouvement différentiel de la scène 14 d'une image à l'image suivante, et il existe différentes méthodes connues de mise en oeuvre de l'algorithme à flot optique, telles que par exemple la méthode de Lucas-Kanade, la méthode de Horn-Schunk, ou encore la méthode de Farneback.

La méthode d'estimation de Lucas-Kanade est particulièrement simple et rapide, dès lors que l'on est en présence d'un flot optique localement constant, c'est-à-dire dont le mouvement est le même pour chaque point de la scène 14 captée par le capteur d'images 12. Cette hypothèse est vérifiée si la scène 14 est parfaitement plane, si le mouvement est parallèle au plan focal du capteur d'images 12 et sans rotation autour de l'axe optique du capteur d'images 12, et avec une illumination constante de la scène 14.

D'autres exemples de mise en oeuvre d'un algorithme à flot optique sont également décrits dans les documents « Optic-Flow Based Control of a 46g Quadrotor » de Briod et al, « Optical Flow Based Velocity Estimation for Vision based Navigation of Aircraft » de Julin et al, et « Distance and velocity estimation using optical flow from a monocular camera » de Ho et al.

L'algorithme à flot optique est en outre mis en oeuvre dans une technique dite de multi-résolution, adaptée pour estimer le flot optique avec différentes résolutions d'image successives, en partant d'une faible résolution jusqu'à une résolution élevée.

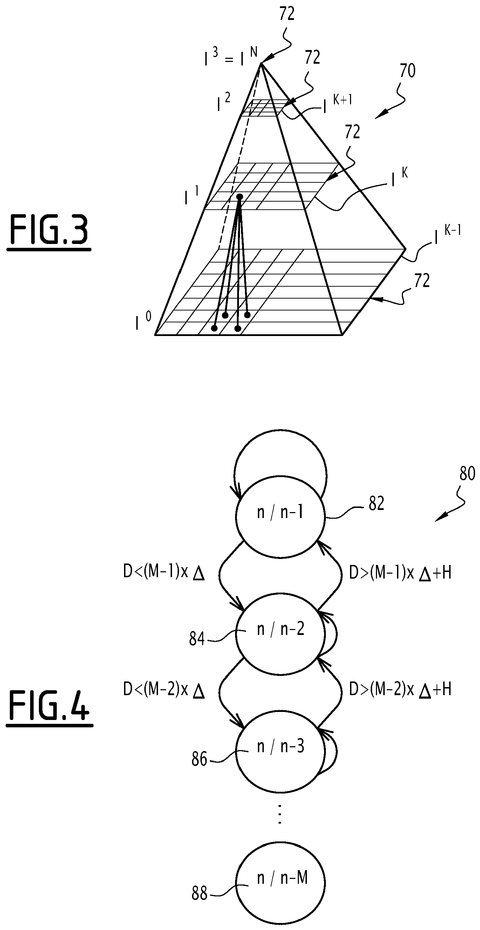

L'algorithme à flot optique est alors, par exemple, un algorithme itératif à implémentation de type pyramidale, comme représenté sur la figure 3, la pyramide 70 comportant plusieurs niveaux 72 et l'image $I^K$ associée à un niveau K respectif étant une image sous-échantillonnée de l'image $I^{K-1}$ associée au niveau suivant K-1. K est un indice représentant le niveau et compris entre 0 et N en évoluant de manière décroissante, N désignant le niveau initial et 0 désignant le niveau final.

Autrement dit, l'algorithme à flot optique est appliqué itérativement à plusieurs niveaux K, K-1 successifs, l'image $I^K$ associée à un niveau K respectif étant une image sous-échantillonnée de l'image $I^{K-1}$ associée au niveau suivant K-1, l'image $I°$ associée au niveau 0 final étant l'image acquise.

L'image $I^N$ la plus sous-échantillonnée correspond alors au niveau initial N de l'algorithme itératif, ou encore au niveau supérieur de la pyramide. L'image $I°$ associée au niveau final 0 de l'algorithme itératif, ou encore au niveau inférieur de la pyramide, est l'image telle qu'acquise par le premier module d'acquisition 42. En d'autres termes, l'image $I°$ associée au niveau final 0 n'est pas sous-échantillonnée.

Le facteur F de sous-échantillonnage d'un niveau K au niveau précédent K+1 est par exemple égal à 2. Le nombre de niveaux 72 de l'algorithme itératif, égal à N+1, est, par exemple, compris entre 2 et 4, et de préférence égal à 3. Autrement dit, N est, par exemple, compris entre 1 et 3, et de préférence égal à 2.

A titre d'exemple, l'image complète au niveau 0 a une résolution de 176 x 144 pixels, l'image au niveau 1 a une résolution de 88 x 72 pixels, celle au niveau 2 de 44 x 36 pixels, et celle au niveau 3 de 22 x 18 pixels, N étant égal à 3 dans cet exemple.

Le sous-échantillonnage de l'image $I^K$ associée à un niveau K par rapport à l'image $I^{K-1}$ associée au niveau suivant K-1 est, par exemple, obtenu en calculant chaque pixel de l'image $I^K$ à partir de $F^2$ pixels de l'image $I^{K-1}$, chaque pixel de l'image $I^K$ étant par exemple une moyenne de $F^2$ pixels correspondants de l'image $I^{K-1}$, F représentant le facteur de sous-échantillonnage. Dans l'exemple de la figure 3, F est égal à 2, et chaque pixel de l'image $I^K$ dépend alors de 4 pixels de l'image $I^{K-1}$, en étant par exemple une moyenne de ces 4 pixels.

La précision du flot optique estimé est alors inversement proportionnelle à la réduction effectuée, en revanche la vitesse maximale détectable correspondante augmente proportionnellement avec le niveau de réduction. L'approche multi-résolution consiste à estimer le flot optique constant dans la plus basse résolution, c'est-à-dire le niveau N, puis à réinjecter ce résultat en tant que prédiction à la résolution suivante, c'est-à-dire le niveau N-1, et ainsi de suite. Cette prédiction injectée à la résolution suivante est remise à l'échelle de cette résolution suivante. L'avantage de travailler initialement sur une version grossière de l'image, c'est-à-dire l'image $I^N$ la plus sous-échantillonnée, réside dans le fait qu'on n'autorise qu'un très petit déplacement dans l'image et que le suivi des points est alors très rapide. L'information de mouvement ainsi obtenue est alors utilisable pour prédire le mouvement sur l'image de niveau inférieur. La progression se fait ainsi de niveau en niveau jusqu'à obtenir une précision suffisante.

En variante, l'estimation est faite du niveau 3 (trois réductions successives) jusqu'au niveau 1 (une réduction), ce qui permet d'obtenir un résultat précis extrêmement rapidement. L'abandon du niveau 0 (image complète) permet, selon cette variante, d'économiser environ 75 % des calculs, ce qui assure un compromis efficace entre temps de calcul et précision du résultat.

En complément facultatif, l'algorithme à flot optique est combiné avec un autre algorithme de traitement d'images, en particulier avec un algorithme de type détecteur de coins, afin d'améliorer l'estimation du mouvement différentiel de la scène d'une image à la suivante, comme décrit dans le document EP 2 400 460 A1.

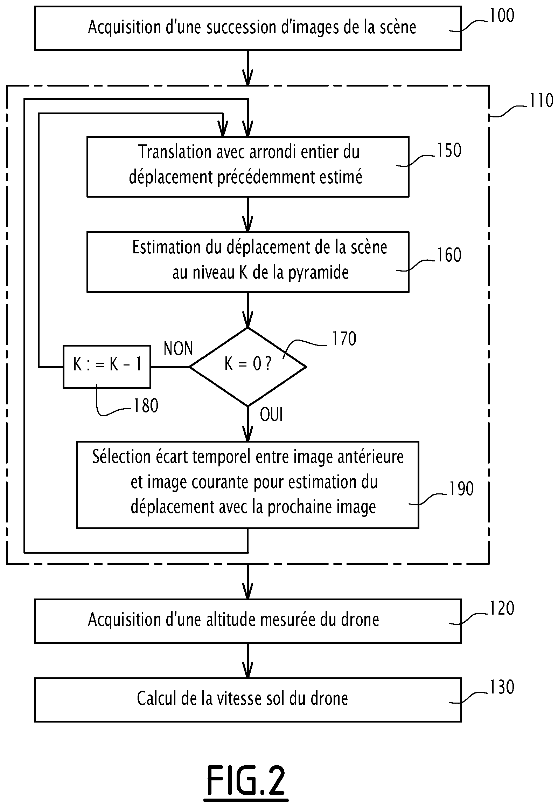

Le module d'estimation 44 est configuré pour calculer au moins une estimation du déplacement de la scène 14 à chaque niveau K, cette estimation étant calculée entre une image antérieure et une image courante. L'image antérieure est en outre translatée d'un déplacement estimé respectif, lors du passage d'un niveau respectif K au suivant K-1, et par exemple préalablement à chaque estimation, comme représenté sur la figure 2. Lorsque la translation est effectuée préalablement à l'estimation, le module d'estimation 44 est configuré pour effectuer la translation préalable au niveau initial 0 à partir du déplacement estimé au niveau final pour l'image précédente.

Le module d'estimation 44 est de préférence configuré pour calculer une unique estimation du déplacement de la scène 14 à chaque niveau K et pour chaque image courante.

En variante, le module d'estimation 44 est configuré pour calculer plusieurs estimations, tel qu'au moins trois estimations, du déplacement de la scène 14 pour au moins un niveau et pour chaque image courante. L'homme du métier comprendra alors que le nombre d'estimations calculées à chaque niveau est un compromis entre précision du calcul et temps de calcul, le calcul étant d'autant plus précise que le nombre d'estimations calculées à chaque niveau est élevé, notamment pour le dernier niveau, c'est-à-dire le niveau avec la meilleure résolution, tel que le niveau 0 ou 1, mais le temps de calcul étant également d'autant plus long que le nombre d'estimations calculées à chaque niveau est élevé. Selon cette variante, le module d'estimation 44 est alors configuré pour calculer plusieurs estimations du déplacement de la scène 14 de préférence pour le dernier niveau, c'est-à-dire le niveau avec la meilleure résolution, tel que le niveau 0 ou 1, et pour chaque image courante.

Selon l'invention, le module d'estimation 44 est configuré en outre pour déterminer un arrondi à la valeur entière du déplacement estimé respectif pour la translation de l'image antérieure lors du passage d'un niveau respectif K au suivant K-1, l'image antérieure étant alors translatée du déplacement arrondi. L'arrondi est de préférence un arrondi à la valeur entière la plus proche du déplacement estimé.

En complément facultatif, le module d'estimation 44 est configuré en outre pour sélectionner un écart temporel entre l'image antérieure et l'image courante en fonction du déplacement déterminé précédemment au niveau final avec l'image précédant l'image courante, l'écart temporel sélectionné initialement étant prédéfini. La sélection de l'écart temporel est de préférence effectuée après l'estimation du déplacement de la scène 14 au niveau final 0, ceci en vue de l'estimation du déplacement pour une nouvelle image acquise correspondant alors à la prochaine image courante à partir de laquelle sera appliqué l'algorithme itératif à flot optique.

Les images sont prises à une fréquence prédéfinie par le capteur d'images 12, et l'écart temporel entre l'image antérieure et l'image courante est de préférence un écart en nombre d'images prises, acquises par le premier module d'acquisition 42.

L'écart en nombre d'images prises est par exemple égal à 1 lorsque l'image antérieure et l'image courante sont deux images prises consécutivement et augmente d'une unité pour chaque image intercalaire supplémentaire prise entre l'image antérieure et l'image courante.

Pour la sélection de l'écart temporel par le module d'estimation 44, l'écart exprimé en nombre d'images est, par exemple, inférieur ou égal à 5, de préférence inférieur ou égal à 3.

Selon ce complément facultatif, le déplacement estimé dépend alors de l'écart temporel sélectionné entre l'image antérieure et l'image courante, et le module d'estimation 44 est de préférence configuré en outre pour diviser le déplacement final estimé par l'écart temporel sélectionné. Ceci permet alors d'estimer le déplacement entre deux images successives, c'est à dire avec un écart temporel unitaire, lorsque l'écart temporel est défini en nombre d'images prises. L'homme du métier comprendra en outre que lorsque l'écart temporel est défini sous forme d'une valeur temporelle, alors le module d'estimation 44 est de préférence configuré en outre pour multiplier le déplacement final estimé par un ratio entre une période temporelle prédéfinie et l'écart temporel sélectionné, afin d'estimer le déplacement entre deux images successives. La période temporelle prédéfinie correspond alors à la période temporelle entre deux images successives, ou encore deux prises d'images par le capteur d'images 12, c'est-à-dire à l'inverse de la fréquence prédéfinie de prise d'images du capteur d'images 12.

En complément facultatif encore, le module d'estimation 44 est configuré pour sélectionner l'écart temporel entre l'image antérieure et l'image courante avec une hystérésis entre l'augmentation et la diminution dudit écart temporel.

En complément facultatif encore, pour la sélection de l'écart temporel entre l'image antérieure et l'image courante, le module d'estimation 44 est configuré pour comparer une valeur lissée courante D du déplacement estimé avec au moins un seuil, la valeur lissée courante D dépendant d'une valeur lissée précédente et du déplacement estimé, la valeur lissée initiale étant prédéfinie.

Dans l'exemple de la figure 4, le module d'estimation 44 est alors configuré pour mettre en oeuvre une machine à états finis 80 afin de sélectionner l'écart temporel en fonction du déplacement déterminé précédemment, tel que la valeur lissée courante D du déplacement estimé.

Dans cet exemple de la figure 4, l'écart temporel est exprimé sous forme de valeurs entières, et cet écart est égal à 1 dans un état initial 82 de la machine à états finis 80, l'écart égal à 1 correspondant à deux images prises consécutivement, telles que des images d'indice n et n-1, comme indiqué précédemment.

Le module d'estimation 44 est configuré pour rester dans cet état initial 82 avec un écart égal à 1 tant que la valeur lissée courante D du déplacement estimé est supérieure ou égale à (M-1) x Δ, où M est un écart maximal prédéfini, exprimé en nombre d'images, et Δ est un seuil prédéfini exprimé dans la même unité que la valeur lissée courante D du déplacement estimé.

Δ est typiquement exprimé en nombre de pixels, et par exemple égal à 2 pixels (px). M correspond également au nombre d'états de la machine à états finis 80, et est par exemple égal à 3.

Le module d'estimation 44 est configuré pour passer à un état suivant 84 de la machine à états finis 80 lorsque la valeur lissée courante D du déplacement estimé est inférieure à (M-1) x Δ, cet état suivant 84 correspondant à un écart égal à 2, c'est-à-dire à deux images séparées par une image intercalaire, telles que des images d'indice n et n-2.

Dans l'exemple où M=3 et Δ=2px, le module d'estimation 44 est alors configuré pour rester dans l'état initial 82 tant que la valeur lissée courante D est supérieure ou égale à 4 pixels, et pour passer à l'état suivant 84 correspondant à l'écart égal à 2 si cette valeur lissée courante D est strictement inférieure à 4 pixels.

Le module d'estimation 44 est configuré pour rester dans cet état suivant 84 de la machine à états finis 80 correspondant à l'écart égal à 2, tant que la valeur lissée courante D du déplacement estimé est supérieure ou égale à (M-2) x Δ, tout en étant inférieure ou égale à (M-1) x Δ + H, où H représente une valeur d'hystérésis exprimée dans la même unité que la valeur lissée courante D et le seuil prédéfini Δ.

H est typiquement exprimée en nombre de pixels, et par exemple égale à 0,5 px.

Dans cet exemple où M=3, Δ=2px et H=0,5px, le module d'estimation 44 est alors configuré pour rester dans cet état suivant 84 correspondant à l'écart égal à 2 tant que la valeur lissée courante D est comprise entre 2 pixels et 4,5 pixels, et pour retourner dans l'état initial 82 correspondant à l'écart égal à 1 seulement lorsque la valeur lissée courante D est strictement supérieure à 4,5 pixels.

De manière analogue, le module d'estimation 44 est configuré pour passer à un état suivant 86 de la machine à états finis 80 lorsque la valeur lissée courante D du déplacement estimé est inférieure à (M-2) x Δ, cet état suivant 86 correspondant à un écart égal à 3, c'est-à-dire à deux images séparées par deux images intercalaires, telles que des images d'indice n et n-3. Le module d'estimation 44 est configuré pour rester dans cet état suivant 86 correspondant à l'écart égal à 3, tant que la valeur lissée courante D du déplacement estimé est supérieure ou égale à (M-3) x Δ, tout en étant inférieure ou égale à (M-2) x Δ + H, et ainsi de suite jusqu'à l'état final 88.

Dans cet exemple où M=3, Δ=2px et H=0,5px, le module d'estimation 44 est alors configuré pour passer à l'état suivant 86 correspondant à l'écart égal à 3 si la valeur lissée courante D est strictement inférieure à 2 pixels, puis pour rester dans cet état suivant 86 tant que la valeur lissée courante D est comprise entre 0 pixel et 2,5 pixels, cet état suivant 86 correspondant en fait ici à l'état final 88, M étant égal à 3, et enfin pour retourner dans l'état précédent 84 associé à l'écart égal à 2 seulement lorsque la valeur lissée courante est strictement supérieure à 2,5 pixels.

La valeur lissée du déplacement, également appelée valeur lissée courante D du déplacement estimé, est de préférence une valeur lissée exponentiellement, et vérifie par exemple l'équation suivante :

$$D := \alpha \cdot D + (1-\alpha) \cdot Trans \qquad (1)$$

où $\alpha$ représente une constante de lissage,
Trans représente la valeur du déplacement estimé, exprimée de préférence sous la forme d'une valeur décimale en nombre de pixels ;
ou encore l'équation suivante :

$$D_p = \alpha \cdot D_{p-1} + (1-\alpha) \cdot Trans \qquad (2)$$

où $D_p$ et $D_{p-1}$ représentent respectivement la valeur lissée courante et la valeur lissée précédente.
$\alpha$ est par exemple égal à 0,959 correspondant à une constante de temps de 0,4s pour un taux d'images de 60 images par seconde, et une valeur initiale par défaut de Trans est par exemple égale à 15 pixels.

La valeur Trans est calculable de différentes manières. L'algorithme à flot optique rend, par exemple, une estimation en pixels en 2 dimensions (Fx, Fy) suivant les 2 axes caractérisant le capteur d'images 12. Typiquement, l'algorithme à flot optique de Lucas-Kanade, donne cette translation grâce à la formule suivante :

$$\begin{bmatrix} F_x \\ F_y \end{bmatrix} = \begin{bmatrix} \sum_E I_x^2 & \sum_E I_x \cdot I_y \\ \sum_E I_x \cdot I_y & \sum_E I_y^2 \end{bmatrix} \cdot \begin{bmatrix} \sum_E I_x \cdot I_t \\ \sum_E I_y \cdot I_t \end{bmatrix} \qquad (3)$$

Ix et Iy étant les composantes du gradient de l'image, et

E étant l'ensemble des points pour lesquels le gradient présente une norme supérieure à un premier utile prédéterminé.

Il est également possible d'obtenir une estimation en 3 dimensions (Tx, Ty, Tz), en utilisant un modèle de mouvement du drone, comme une translation en 3 dimensions. Cela nécessite alors une adaptation de l'algorithme à flot optique pour prendre en compte le fait que le modèle de mouvement induit des translations différentes selon la zone de l'image.

Dans le cas d'une sortie en 3 dimensions (Tx, Ty, Tz), celle-ci est, par exemple, exprimée comme une translation en 3 dimensions du drone 10 en mètres, à 1 mètre de hauteur. On prend cette hypothèse de 1 mètre de hauteur car l'algorithme à flot optique ne connaît pas la hauteur du drone 10, et son résultat dépend de cette hauteur. La valeur Trans est alors par exemple calculée à l'aide de l'équation suivante :

$$Trans = \sqrt{\left(|f \cdot T_x| + |c_x \cdot T_z|\right)^2 + \left(|f \cdot T_y| + |c_y \cdot T_z|\right)^2} \qquad (4)$$

où f représente la focale du capteur 12, exprimée en pixels, et

$c_x$, $c_y$ représentent les coordonnées en pixels du centre optique.

Le module d'estimation 44 est alors configuré pour retenir, comme valeur du déplacement estimé de la scène 14 pour chaque nouvelle image, de préférence celle du niveau avec la meilleure résolution, c'est-à-dire le niveau 0, ce résultat étant le plus précis. La valeur estimée fournie en sortie du module d'estimation 44 est une valeur décimale, telle qu'une valeur décimale exprimée en nombre de pixels.

Le deuxième module d'acquisition 46 est configuré pour acquérir l'altitude mesurée, telle que celle fournie par l'altimètre 20. Le deuxième module d'acquisition 46 est de préférence configuré pour acquérir de manière régulière l'altitude mesurée de la part du dispositif de mesure, ou encore au fur et à mesure que l'altitude est mesurée par ledit dispositif de mesure.

Le module de calcul 48 est configuré pour calculer la vitesse sol du drone de manière connue en soi, à partir de l'altitude mesurée acquise et du déplacement du terrain estimé par le dispositif d'estimation 40, la scène 14 étant alors le terrain survolé par le drone 10.

Le fonctionnement de l'appareil électronique de calcul 16, et en particulier du dispositif électronique d'estimation 40, va être à présent décrit en regard de la figure 2 représentant un organigramme d'un procédé de calcul de la vitesse sol du drone, ce procédé de calcul incluant un procédé d'estimation du déplacement de la scène 14 observée par le capteur d'images 12.

Lors d'une étape initiale 100, mise en oeuvre de manière régulière, le dispositif électronique d'estimation 40 acquiert, via son premier module d'acquisition 42, au moins deux images de la scène 14, prises préalablement par le capteur d'images 12. L'homme du métier comprendra que des images prises par le capteur 12 sont de préférence acquises régulièrement par le premier module d'acquisition 42 et stockées dans une mémoire tampon, telle qu'une zone de la mémoire 52, en attendant d'être prises en compte par le module d'estimation 44 pour l'estimation du déplacement de la scène 14 à chaque nouvelle image acquise.

Le dispositif électronique d'estimation 40 calcule ensuite, lors de l'étape suivante 110 et via son module d'estimation 44, une estimation, via un algorithme à flot optique décrit précédemment, du déplacement de la scène 14 entre l'image antérieure et l'image courante acquises. Cette étape de calcul de l'estimation 110 sera décrite plus en détail par la suite.

L'appareil électronique de calcul 16 acquiert ensuite, lors de l'étape suivante 120 et via son deuxième module d'acquisition 46, l'altitude du drone 10 mesurée par le dispositif de mesure, tel que l'altimètre 20, cette altitude mesurée acquise correspondant à celle à laquelle l'estimation du déplacement de la scène 14 a été préalablement effectuée lors de la précédente étape 110.

Autrement dit, l'homme du métier comprendra que l'appareil électronique de mesure 16 comprend de préférence des moyens de synchronisation temporelle du premier module d'acquisition 42 et du deuxième module d'acquisition 44, afin que l'image acquise ayant servi au calcul de l'estimation du déplacement de la scène 14 via l'algorithme à flot optique corresponde temporellement à l'altitude mesurée acquise.

L'appareil électronique de calcul 16 calcule enfin, lors de l'étape 130 et via son module de calcul 48, la vitesse sol du drone 10 à partir de l'altitude mesurée acquise lors de l'étape 120 et du déplacement du terrain estimé par le dispositif d'estimation 40 lors de l'étape 110, la scène 14 étant dans ce cas un terrain survolé par le drone 10.

L'étape d'estimation 110 va être à présent décrite plus en détail. Cette étape d'estimation 110 comporte une sous-étape 150 de translation de l'image antérieure avec le déplacement précédemment estimé au niveau précédent de l'algorithme à flot optique appliqué itérativement, ou bien avec le déplacement estimé au niveau final 0 pour l'image précédente lorsque l'algorithme à flot optique est réitéré au niveau initial N pour une nouvelle image acquise.

Selon l'invention, cette translation de l'image antérieure est alors effectuée avec un arrondi à une valeur entière de ce déplacement précédemment estimé, de préférence un arrondi à la valeur entière la plus proche de ce déplacement estimé. Cet arrondi à la valeur entière du déplacement estimé est exprimé en nombre de pixels. Ceci permet alors de réduire la complexité algorithmique de cette translation pour le module d'estimation 40, et notamment d'éviter d'avoir à faire une interpolation qui serait nécessaire dans le cas d'un déplacement estimé avec une valeur décimale en nombre de pixels.

L'étape d'estimation 110 comporte ensuite une sous-étape 160 d'estimation du déplacement de la scène 14 au niveau K de la pyramide 70 à l'aide d'une des méthodes connues de mise en oeuvre de l'algorithme à flot optique, telle que par exemple la méthode de Lucas-Kanade.

L'étape d'estimation 110 comporte ensuite une sous-étape de test 170 pour déterminer si la valeur de l'indice K représentant le niveau respectif dans l'algorithme à flot optique appliqué itérativement est strictement positive ou bien nulle. Ce test permet alors de déterminer lorsque l'indice K est égal à 0 que l'algorithme itératif est arrivé au niveau final correspondant à la détermination de l'estimation précise pour l'image courante, ou bien lorsque l'indice K est strictement positif que l'algorithme doit être réitéré au niveau suivant avec une image plus échantillonnée.

Si le test effectué lors de la sous-étape 170 est négatif, c'est-à-dire K>0, l'étape d'estimation 110 comporte alors une sous-étape 180 de décrémentation de l'indice K, l'indice K évoluant de manière décroissante entre N et 0, et étant décrémenté d'une unité à chaque décrémentation 180.

L'homme du métier comprendra que, dans le cas de la variante décrite précédemment, où l'estimation est faite du niveau 3 (trois réductions successives) jusqu'au niveau 1 (une réduction), avec un abandon du niveau 0 (image complète non sous échantillonnée), le test effectué lors de la sous-étape 170 consiste à déterminer si la valeur de l'indice K est strictement supérieure à 1 ou bien égale à 1, et que l'indice K évolue alors de manière décroissante entre N et 1.

Lorsque le test effectué lors de la sous-étape 170 est au contraire positif, c'est-à-dire K=0 ou bien K=1 selon la variante précitée, l'étape d'estimation 110 passe à une sous-étape 190 de sélection de l'écart temporel entre l'image antérieure et l'image courante pour l'estimation du déplacement avec la prochaine image. Cette sélection est par exemple effectuée de la manière décrite précédemment à l'aide de la machine à états finis 80 en regard de la figure 4.

A l'issue de cette sous-étape de sélection 190, le module d'estimation 44 fournit d'une part, notamment au module de calcul 48, l'estimation calculée du déplacement de la scène 14 pour l'image courante, et recommence d'autre part l'algorithme itératif à flot optique pour la nouvelle image acquise en retournant à la sous-étape de translation 150.

On conçoit ainsi que le dispositif électronique d'estimation 40 selon l'invention et le procédé d'estimation associé permettent d'estimer plus efficacement un déplacement de la scène 14 observée par le capteur d'images 12 équipant le drone 10, notamment de par la translation du déplacement arrondi à la valeur entière, préalablement à une nouvelle itération de l'algorithme à flot optique au prochain niveau.

En outre, le fait de sélectionner en complément facultatif l'écart temporel entre l'image antérieure et l'image courante en fonction du déplacement déterminé précédemment permet de garder une précision satisfaisante, en augmentant la translation totale à estimer lorsque la valeur du déplacement précédemment estimé diminue.

**Revendications**

1. Dispositif électronique (40) d'estimation d'un déplacement d'une scène (14) observée par un capteur d'images (12) équipant un drone (10), le dispositif (40) comprenant :

   - un premier module d'acquisition (42) configuré pour acquérir une succession d'images de la scène (14), prises par le capteur d'images (12),
   - un module d'estimation (44) configuré pour calculer une estimation, via un algorithme à flot optique, d'un déplacement de la scène (14) entre une image antérieure et une image courante acquises, l'algorithme à flot optique étant appliqué itérativement à plusieurs niveaux successifs (72 ; K, K-1), l'image ($I^K$) associée à un niveau (K) respectif étant une image sous-échantillonnée de l'image ($I^{K-1}$) associée au niveau suivant (K-1), l'image ($I^0$) associée au niveau final étant l'image acquise,

le module d'estimation (44) étant configuré pour calculer au moins une estimation du déplacement de la scène (14) à chaque niveau (72 ; K), l'image antérieure étant en outre translatée d'un déplacement estimé respectif, lors du passage d'un niveau respectif (K) au suivant (K-1),

**caractérisé en ce que** le module d'estimation (44) est configuré en outre pour déterminer un arrondi à la valeur entière du déplacement estimé respectif, l'image antérieure étant alors translatée du déplacement arrondi, lors du passage d'un niveau respectif (K) au suivant (K-1).

2.  Dispositif (40) selon la revendication 1, dans lequel le module d'estimation (44) est configuré en outre pour sélectionner un écart temporel entre l'image antérieure et l'image courante en fonction du déplacement déterminé précédemment au niveau final avec l'image précédant l'image courante, l'écart temporel sélectionné initialement étant prédéfini.

3.  Dispositif (40) selon la revendication 2, dans lequel les images sont prises à une fréquence prédéfinie par le capteur d'images (12), et l'écart temporel entre l'image antérieure et l'image courante est un écart en nombre d'images prises, acquises par le premier module d'acquisition (42),
    l'écart en nombre d'images prises étant égal à 1 lorsque l'image antérieure et l'image courante sont deux images prises consécutivement et augmentant d'une unité pour chaque image intercalaire supplémentaire prise entre l'image antérieure et l'image courante.

4.  Dispositif (40) selon la revendication 2 ou 3, dans lequel la sélection de l'écart temporel entre l'image antérieure et l'image courante comporte une hystérésis entre l'augmentation et la diminution dudit écart temporel.

5.  Dispositif (40) selon l'une quelconque des revendications 2 à 4, dans lequel pour la sélection de l'écart temporel entre l'image antérieure et l'image courante, le module d'estimation (44) est configuré pour comparer une valeur lissée courante (D) du déplacement estimé avec au moins un seuil, la valeur lissée courante (D) dépendant d'une valeur lissée précédente et du déplacement estimé, la valeur lissée initiale étant prédéfinie.

6.  Dispositif (40) selon l'une quelconque des revendications précédentes, dans lequel le module d'estimation (44) est configuré pour calculer une unique estimation du déplacement de la scène (14) à chaque niveau (72 ; K) et pour chaque image courante.

7.  Appareil électronique (16) de calcul d'une vitesse sol d'un drone (10), l'appareil (16) comprenant :

    - un deuxième module d'acquisition (46) configuré pour acquérir une altitude mesurée, fournie par un dispositif de mesure (20) équipant le drone (10),
    - un dispositif d'estimation (40) configuré pour estimer un déplacement d'une scène (14) observée par un capteur d'images (12) équipant le drone (10), la scène (14) étant un terrain survolé par le drone (10), et
    - un module de calcul (48) configuré pour calculer la vitesse sol du drone (10), à partir de l'altitude mesurée acquise et du déplacement du terrain estimé par le dispositif d'estimation (40),

    **caractérisé en ce que** le dispositif d'estimation (40) est selon l'une quelconque des revendications précédentes.

8.  Drone (10), comprenant un appareil électronique (16) de calcul d'une vitesse sol du drone (10), **caractérisé en ce que** l'appareil électronique de calcul (16) est selon la revendication précédente.

9.  Procédé d'estimation d'un déplacement d'une scène (14) observée par un capteur d'images (12) équipant un drone (10), le procédé étant mis en oeuvre par un dispositif électronique d'estimation (40), et comprenant les étapes suivantes :

    - l'acquisition (100) d'une succession d'images de la scène (14), prises par le capteur d'images (12),
    - l'estimation (110), via un algorithme à flot optique, d'un déplacement de la scène (14) entre une image antérieure et une image courante acquises, l'algorithme à flot optique étant appliqué itérativement à plusieurs niveaux successifs (72 ; K, K-1), l'image ($I^K$) associée à un niveau (K) respectif étant une image sous-échantillonnée de l'image ($I^{K-1}$) associée au niveau suivant (K-1), l'image ($I^0$) associée au niveau final étant l'image acquise,

    l'étape d'estimation (110) comportant le calcul (160) d'au moins une estimation du déplacement de la scène (14) à chaque niveau (72 ; K), l'image antérieure étant en outre translatée (150) d'un déplacement estimé respectif, lors du passage d'un niveau respectif (K) au suivant (K-1),

**caractérisé en ce que** l'étape d'estimation (110) comporte en outre la détermination (150) d'un arrondi à la valeur entière du déplacement estimé respectif, l'image antérieure étant alors translatée du déplacement arrondi, lors du passage d'un niveau respectif (K) au suivant (K-1).

**10.** Programme d'ordinateur comportant des instructions logicielles qui, lorsqu'elles sont exécutées par un ordinateur, mettent en oeuvre un procédé selon la revendication précédente.

FIG.1

Acquisition d'une succession d'images de la scène — 100

Translation avec arrondi entier du déplacement précédemment estimé — 150

Estimation du déplacement de la scène au niveau K de la pyramide — 160

170

NON  K = 0 ?

K : = K – 1 — 180

OUI

Sélection écart temporel entre image antérieure et image courante pour estimation du déplacement avec la prochaine image — 190

110

Acquisition d'une altitude mesurée du drone — 120

Calcul de la vitesse sol du drone — 130

## FIG.2

$$\underline{FIG.3}$$

$$\underline{FIG.4}$$

Europäisches
Patentamt

European
Patent Office

Office européen
des brevets

**RAPPORT DE RECHERCHE EUROPEENNE**

Numéro de la demande

EP 18 18 4109

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MENG LIU ET AL: "Multi-resolution optical flow tracking algorithm based on multi-scale Harris corner points feature", CONTROL AND DECISION CONFERENCE, 2008. CCDC 2008. CHINESE, IEEE, PISCATAWAY, NJ, USA, 2 juillet 2008 (2008-07-02), pages 5287-5291, XP031306030, ISBN: 978-1-4244-1733-9 | 1,6,9,10 | INV.<br>G06T7/207 |
| Y | * abrégé; figures 1, 2 * <br>* "Tracking algorithm based on optical flow"; <br>page 5287 - page 5288 * <br>----- | 2-5,7,8 | |
| Y | DOMINIK HONEGGER ET AL: "Real-time velocity estimation based on optical flow and disparity matching", INTELLIGENT ROBOTS AND SYSTEMS (IROS), 2012 IEEE/RSJ INTERNATIONAL CONFERENCE ON, IEEE, 7 octobre 2012 (2012-10-07), pages 5177-5182, XP032287376, DOI: 10.1109/IROS.2012.6385530 ISBN: 978-1-4673-1737-5 <br>* abrégé * <br>* "Introduction", "Background"; <br>page 5177 - page 5178 * <br>----- <br>-/-- | 7,8 | |

| | |
|---|---|
| | DOMAINES TECHNIQUES RECHERCHES (IPC) |
| | G06T |

Le présent rapport a été établi pour toutes les revendications

| Lieu de la recherche | Date d'achèvement de la recherche | Examinateur |
|---|---|---|
| Munich | 15 octobre 2018 | Rodes Arnau, Isabel |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 18 18 4109

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | CAMUS T: "Real-Time Quantized Optical Flow", REAL-TIME IMAG, ACADEMIC PRESS LIMITED, GB, vol. 3, no. 2, 1 avril 1997 (1997-04-01), pages 71-86, XP004419617, ISSN: 1077-2014, DOI: 10.1006/RTIM.1996.0048 * abrégé; figure 2 * * "Time-Space Trade-off"; page 73 - page 76 * | 2-5 | |
| A | Richard Szeliski: "Motion estimation Computer Vision CSE576, Spring 2005", , 1 janvier 2005 (2005-01-01), XP055455346, Extrait de l'Internet: URL:http://slideplayer.com/slide/5373606/ [extrait le 2018-02-28] * Slides 1-15 * | 1-10 | |
| A | J-Y BOUGUET: "Pyramidal Implementation of the Lucas Kanade Feature Tracker: Description of the algorithm", INTEL CORPORATION, MICROPROCESSOR RESEARCH LABS, TECHNICAL REPORT,, 1 janvier 1999 (1999-01-01), pages 1-9, XP002536058, * le document en entier * | 1-10 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 15 octobre 2018 | Rodes Arnau, Isabel |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

page 2 de 2

**EP 3 435 329 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2400460 A1

**Littérature non-brevet citée dans la description**

- **DE LUCAS B. D. ; KANADE T.** An Iterative Image Registration Technique with an Application to Stereo Vision. *Proc. DARPA Image Understanding Workshop,* 1981, 121-130
- **DE HORN B. K. P. ; SCHUNK B.** Determining Optical Flow. *Artificial Intelligence,* 1981, vol. 17, 185-204
- **DE MONDRAGON I. et al.** 3D Pose Estimation Based on Planar Object Tracking for UAVs Control. *Proc. IEEE Conférence on Robotics and Automation,* Mai 2010, 35-41
- **DE BRIOD ; DE JULIN et al.** Optic-Flow Based Control of a 46g Quadrotor. *Optical Flow Based Velocity Estimation for Vision based Navigation of Aircraft*
- **DE HO.** *Distance and velocity estimation using optical flow from a monocular camera*